# EUROPEAN PATENT APPLICATION

(11) **EP 3 413 560 A1**
(43) Date of publication of application: **12.12.2018**
(21) Application number: 18167944.0
(22) Date of filing: 18.04.2018
(51) Int. Cl.: H04N 7/18, G06F 17/30

(54) **SYSTEMS AND METHODS FOR USING A MOBILE DEVICE TO RECORD VIDEO DATA STREAMS AS A PROFILE CAMERA OF A SURVEILLANCE SYSTEM CAMERA BASED ON GPS**

(30) Priority: 07.06.2017 US 201715616236
(71) Applicant: Honeywell International Inc., Morris Plains, NJ New Jersey 07950 (US)
(72) Inventor: VISHNU, Nidhin, Morris Plains, NJ 07950 (US); JOSE, Vinu, Morris Plains, NJ 07950 (US); CHAURASIA, Jitendra Sitaram, Morris Plains, NJ 07950 (US)
(74) Representative: Houghton, Mark Phillip

(57) **Abstract**

Systems and methods for using a mobile device to record video data streams as a profile camera of a surveillance system camera based on GPS are provided. Some methods can include receiving a video data stream from a mobile device in a region, identifying a first of a plurality of surveillance system cameras located closest to the mobile device in the region, associating or attaching the video data stream to the first of the plurality of surveillance system cameras, and identifying the mobile device as a profile camera of the first of the plurality of surveillance system cameras.

## Description

### FIELD

The present invention relates generally to surveillance systems. More particularly, the present invention relates to systems and methods for using a mobile device to record video data streams as a profile camera of a surveillance system camera based on GPS.

### BACKGROUND

When an untoward incident occurs in a region, such as a city, the incident may or may not be captured by a CCTV surveillance system, depending on the location of surveillance system cameras. For example, when a surveillance system camera is not located in the vicinity of the incident or is not focused on the incident while the incident is occurring, the incident is not captured by known surveillance systems. Indeed, during an emergency, there are no known systems and methods for reporting the incident to a surveillance operator or for the surveillance operator to monitor or review the incident when the incident occurs outside of the range of surveillance system cameras.

Furthermore, there are no known systems and methods for recording video data streams with a mobile telephone or other mobile device in the surveillance system such that the mobile device reports the video data streams to the surveillance system in a timely manner. Further still, because mobile devices have limited storage, video data streams with high resolution cannot be captured and stored long enough to report the video data streams to the surveillance system in a timely manner.

In view of the above, there is a continuing, ongoing need for improved systems and methods.

### BRIEF DESCRIPTION OF THE DRAWINGS

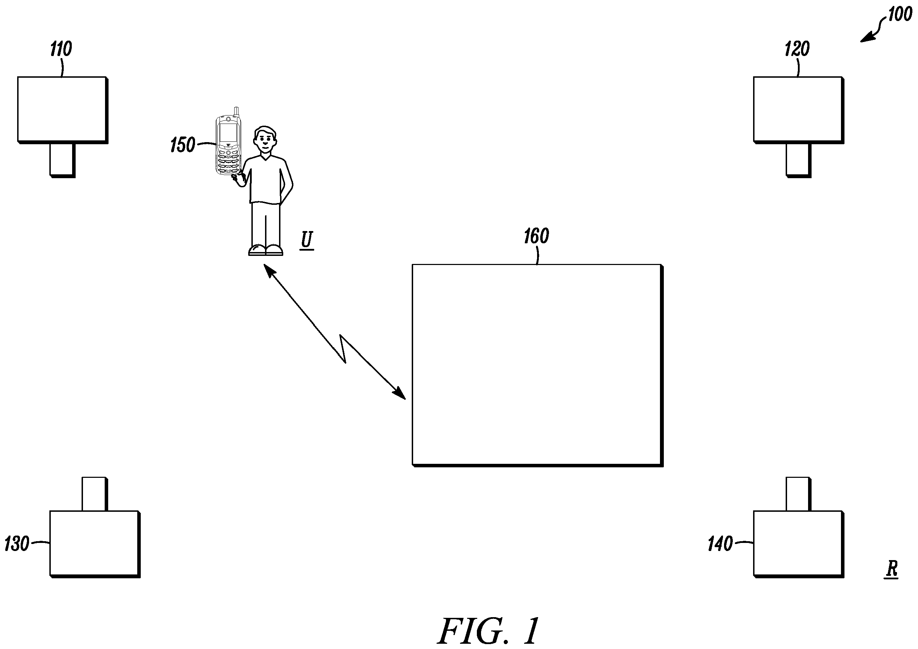

FIG. 1 is a block diagram of a system in accordance with disclosed embodiments.

### DETAILED DESCRIPTION

While this invention is susceptible of an embodiment in many different forms, there are shown in the drawings and will be described herein in detail specific embodiments thereof with the understanding that the present disclosure is to be considered as an exemplification of the principles of the invention. It is not intended to limit the invention to the specific illustrated embodiments.

Embodiments disclosed herein can include systems and methods for using a mobile device to record video data streams as a profile camera of a surveillance system camera based on GPS. For example, when an untoward incident occurs in a region, such as a city, a user with a mobile device, such as a telephone, can record a video data stream with the mobile device to capture the incident and save the video data stream in a memory device of the mobile device, and systems and methods disclosed herein can authenticate the user, the mobile device, and/or the video data stream and upload the video data stream to a surveillance system monitoring the region.

In some embodiments, systems and methods disclosed herein can associate or attach the video data stream recorded by the mobile device to the surveillance system camera located closest to the mobile device based on GPS location. Furthermore, in some embodiments, systems and methods disclosed herein can identify the mobile device as a profile camera of the surveillance system camera located closest to the mobile device. Upon uploading the video data stream to the surveillance system, upon associating or attaching the video data stream to the surveillance system camera, or upon identifying the mobile device as the profile camera of the surveillance system, systems and methods disclosed herein can record the video data stream in a memory device associated with the surveillance system and send a notification of an event to a surveillance operator associated with the surveillance system or the surveillance system camera for review and response, immediately or at a later time.

As explained above, some systems and methods in accordance with disclosed embodiments can upload the video data stream recorded by the mobile device to the surveillance system. However, some systems and methods in accordance with disclosed embodiments can upload a live video data stream captured by the mobile device to the surveillance system. In embodiments that upload the live video data stream to the surveillance system, the surveillance system can associate or attach the live video data stream to the surveillance system camera located closest to the mobile device based on GPS location, identify the mobile device as a profile camera of the surveillance system camera located closest to the mobile device, record the live video data stream in a memory device associated with the surveillance system, and send a notification of an event to a surveillance operator associated with the surveillance system or the surveillance system camera for review and response, immediately or at a later time.

In accordance with disclosed embodiments, the surveillance system can monitor the region and include a plurality of surveillance system cameras named, for example, Area 1, Area 2, Area 3, and Area 4, based on the area of the region that each monitors. When a mobile device in the region uploads a live or recorded video data stream to the surveillance system, systems and methods disclosed herein can register the mobile device by identifying the GPS location of the mobile device at the time that the mobile device recorded or live streamed the video data stream, by identifying the GPS location of each of the plurality of surveillance system cameras, and by identifying a first of the plurality of surveillance system cameras, for example, the Area 1 surveillance system camera, as located closest to the mobile device. Then, systems and methods disclosed herein can identify the mobile device as a profile camera of the Area 1 surveillance system camera and name the mobile device profile camera, for example, Area 1_ProfileCam.

In some embodiments, a mobile application can be installed on the mobile device, and upon a user selecting or opening the mobile application, the mobile application can be executed to identify the GPS location of the mobile device and transmit the GPS location to the surveillance system with the live or recorded video data stream. When the surveillance system receives the live or recorded video data stream from the mobile device, systems and methods disclosed herein can record the live or recorded video data stream in a memory device associated with the surveillance system, for example, in a location designated for the Area 1 surveillance system camera, and identify the video data stream as originating from the mobile device, for example, the Area 1_ProfileCam.

As explained above, systems and methods disclosed herein can identify the GPS location of the mobile device at the time that the mobile device recorded or live streamed the video data stream. Accordingly, when the user moves from a first area of the region to a second area of the region and records or live streams a second video data stream from the second area of the region, systems and methods disclosed herein can identify the GPS location of the mobile device at the time that the mobile device recorded or live streamed the second video data stream, identify a second of the plurality of surveillance system cameras, for example, the Area 2 surveillance system camera, as located closest to the mobile device when the mobile device recorded or live streamed the second video data stream, and identify the mobile device as a profile camera of the Area 2 surveillance system camera, for example, Area 2_ProfileCam, for uploading the second video data stream to the surveillance system.

It is to be understood that systems and methods disclosed herein can be executed and controlled by a surveillance system and a mobile device and that the surveillance system can include a plurality of surveillance system cameras, a control panel device, a cloud network, and a server device. It is to be further understood that some or all of the mobile device, the surveillance system, the plurality of surveillance system cameras, the control panel device, the cloud network, and the server device can include a user interface device, a memory device, and a transceiver device each of which can be in communication with control circuitry, one or more programmable processors, and executable control software as would be understood by one of ordinary skill in the art. The executable control software can be stored on a transitory or non-transitory computer readable medium, including but not limited to, local computer memory, RAM, optical storage media, magnetic storage media, flash memory, and the like.

FIG. 1 is a block diagram of a system 100 in accordance with disclosed embodiments. As seen in FIG. 1, the system 100 can include a plurality of surveillance system cameras 110, 120, 130, 140 monitoring a region R. The surveillance system camera 110 can monitor a first area of the region R and be named Area 1, the surveillance system camera 120 can monitor a second area of the region R and be named Area 2, the surveillance system camera 130 can monitor a third area of the region R and be named Area 3, and the surveillance system camera 140 can monitor a fourth area of the region R and be named Area 4.

As seen in FIG. 1, the system 100 can also include a mobile device 150 of a user U that can record and transmit a video data stream of an incident that occurred in the region R or live stream a video data stream of an incident occurring in the region R to a control panel device or a server device 160 of a surveillance system associated with the plurality of surveillance system cameras 110, 120, 130, 140. It is to be understood that the control panel device or the server device 160 can be located within our outside of the region R.

The mobile device 150 can identify a GPS location of the mobile device 150 at the time that the video data stream is recorded or live streamed and transmit the GPS location of the mobile device 150 to the control panel device or the server device 160. The control panel device or the server device 160 can identify the GPS location of each of the plurality of surveillance system cameras 110, 120, 130, 140, identify the Area 1 surveillance system camera 110 as located closest to the mobile device 150, identify the mobile device as a profile camera Area 1_ProfileCam of the Area 1 surveillance system camera 110, and record the live or recorded video data stream from the mobile device 150 in a memory device associated with the control panel device or the server device 160 in a location designated for the Area 1 surveillance system camera 110 and identified as a video data stream originating from the Area 1_Profile Cam mobile device 150.

Although a few embodiments have been described in detail above, other modifications are possible. For example, the logic flows described above do not require the particular order described or sequential order to achieve desirable results. Other steps may be provided, steps may be eliminated from the described flows, and other components may be added to or removed from the described systems. Other embodiments may be within the scope of the invention.

From the foregoing, it will be observed that numerous variations and modifications may be effected without departing from the spirit and scope of the invention. It is to be understood that no limitation with respect to the specific system or method described herein is intended or should be inferred. It is, of course, intended to cover all such modifications as fall within the spirit and scope of the invention.

Preferred Embodiments of the Present Invention are as numbered below:
1. A method comprising:
   receiving a video data stream from a mobile device in a region;
   identifying a first of a plurality of surveillance system cameras located closest to the mobile device in the region; and
   associating or attaching the video data stream to the first of the plurality of surveillance system cameras.
2. The method of 1 further comprising uploading the video data stream from a memory device of the mobile device.
3. The method of 1 further comprising live streaming the video data stream from the mobile device.
4. The method of 1 further comprising authenticating the mobile device or the video data stream.
5. The method of 1 further comprising:
   receiving a first GPS location of the mobile device in the region;
   identifying a second GPS location of each of the plurality of surveillance system cameras;
   comparing the first GPS location of the mobile device to the second GPS location of each of the plurality of surveillance system cameras; and
   based on the comparing, identifying the first GPS location being closest to the second GPS location of the first of the plurality of surveillance system cameras to identify the first of the plurality of surveillance system cameras located closest to the mobile device in the region.
6. The method of 5 wherein the first GPS location identifies a physical location of the mobile device when the mobile device recorded or live streamed the video data stream.
7. The method of 1 further comprising identifying the mobile device as a profile camera of the first of the plurality of surveillance system cameras.
8. The method of 1 further comprising recording the video data stream in a memory device associated with a surveillance system of which the plurality of surveillance system cameras are a part.
9. The method of 8 further comprising recording the video data stream in a location of the memory device designated for the first of the plurality of surveillance system cameras.
10. The method of 9 further comprising identifying the video data stream in the memory device as originating from a profile camera of the first of the plurality of surveillance system cameras.
11. A system comprising:
   a transceiver device;
   a programmable processor; and
   executable control software stored on a non-transitory computer readable medium,
   wherein the transceiver device receives a video data stream from a mobile device in a region,
   wherein the programmable processor and the executable control software identify a first of a plurality of surveillance system cameras located closest to the mobile device in the region, and
   wherein the programmable processor and the executable control software associate or attach the video data stream to the first of the plurality of surveillance system cameras.
12. The system of 11 wherein the transceiver device uploads the video data stream from a memory device of the mobile device.
13. The system of 11 wherein the transceiver device live streams the video data stream from the mobile device.
14. The system of 11 wherein the programmable processor and the executable control software authenticate the mobile device or the video data stream.
15. The system of 11 wherein the transceiver device receives a first GPS location of the mobile device in the region, wherein the programmable processor and the executable control software identify a second GPS location of each of the plurality of surveillance system cameras, compare the first GPS location of the mobile device to the second GPS location of each of the plurality of surveillance system cameras, and based on the comparing identify the first GPS location being closest to the second GPS location of the first of the plurality of surveillance system cameras to identify the first of the plurality of surveillance system cameras located closest to the mobile device in the region.
16. The system of 15 wherein the first GPS location identifies a physical location of the mobile device when the mobile device recorded or live streamed the video data stream.
17. The system of 11 wherein the programmable processor and the executable control software identify the mobile device as a profile camera of the first of the plurality of surveillance system cameras.
18. The system of 11 further comprising a memory device associated with a surveillance system of which the plurality of surveillance system cameras are a part, wherein the programmable processor and the executable control software record the video data stream in the memory device.
19. The system of 18 wherein the programmable processor and the executable control software record the video data stream in a location of the memory device designated for the first of the plurality of surveillance system cameras.
20. The system of 19 wherein the programmable processor and the executable control software identify the video data stream in the memory device as originating from a profile camera of the first of the plurality of surveillance system cameras.

## Claims

1. A method comprising:
receiving a video data stream from a mobile device in a region;
identifying a first of a plurality of surveillance system cameras located closest to the mobile device in the region; and
associating or attaching the video data stream to the first of the plurality of surveillance system cameras.

2. The method of claim 1 further comprising uploading the video data stream from a memory device of the mobile device.

3. The method of claim 1 further comprising live streaming the video data stream from the mobile device.

4. The method of claim 1 further comprising authenticating the mobile device or the video data stream.

5. The method of claim 1 further comprising:
receiving a first GPS location of the mobile device in the region;
identifying a second GPS location of each of the plurality of surveillance system cameras;
comparing the first GPS location of the mobile device to the second GPS location of each of the plurality of surveillance system cameras; and
based on the comparing, identifying the first GPS location being closest to the second GPS location of the first of the plurality of surveillance system cameras to identify the first of the plurality of surveillance system cameras located closest to the mobile device in the region.

6. The method of claim 5 wherein the first GPS location identifies a physical location of the mobile device when the mobile device recorded or live streamed the video data stream.

7. The method of claim 1 further comprising identifying the mobile device as a profile camera of the first of the plurality of surveillance system cameras.

8. The method of claim 1 further comprising recording the video data stream in a memory device associated with a surveillance system of which the plurality of surveillance system cameras are a part.

9. The method of claim 8 further comprising recording the video data stream in a location of the memory device designated for the first of the plurality of surveillance system cameras.

10. The method of claim 9 further comprising identifying the video data stream in the memory device as originating from a profile camera of the first of the plurality of surveillance system cameras.

11. A system comprising:
a transceiver device;
a programmable processor; and
executable control software stored on a non-transitory computer readable medium,
wherein the transceiver device receives a video data stream from a mobile device in a region,
wherein the programmable processor and the executable control software identify a first of a plurality of surveillance system cameras located closest to the mobile device in the region, and
wherein the programmable processor and the executable control software associate or attach the video data stream to the first of the plurality of surveillance system cameras.

12. The system of claim 11 wherein the transceiver device uploads the video data stream from a memory device of the mobile device.

13. The system of claim 11 wherein the transceiver device live streams the video data stream from the mobile device.

14. The system of claim 11 wherein the programmable processor and the executable control software authenticate the mobile device or the video data stream.

15. The system of claim 11 wherein the transceiver device receives a first GPS location of the mobile device in the region, wherein the programmable processor and the executable control software identify a second GPS location of each of the plurality of surveillance system cameras, compare the first GPS location of the mobile device to the second GPS location of each of the plurality of surveillance system cameras, and based on the comparing identify the first GPS location being closest to the second GPS location of the first of the plurality of surveillance system cameras to identify the first of the plurality of surveillance system cameras located closest to the mobile device in the region.
